# EUROPÄISCHE PATENTSCHRIFT

(11) **EP 0 608 452 B1**
(45) Veröffentlichungstag und Bekanntmachung des Hinweises auf die Patenterteilung: **19.10.1994**
(21) Anmeldenummer: 93101215.7
(22) Anmeldetag: 27.01.1993
(51) Int. Cl.: H02K 7/08, H02K 5/167

(54) **Antriebseinheit, insbesondere elektromotorischer Fensterheber-Antrieb für ein Kraftfahrzeug**
Drive assembly, in particular electromotive window-regulator drive for an automative vehicle
Ensemble d'entraînement, en particulier entraînement électro-moteur de lève-vitre pour un véhicule automobile

(43) Veröffentlichungstag der Anmeldung: 03.08.1994
(73) Patentinhaber: SIEMENS AKTIENGESELLSCHAFT, 80333 München (DE)
(72) Erfinder: Schmidt, Kurt, W-6977 Werbach-Wenkheim (DE)

(56) Entgegenhaltungen:
- EP-A- 0 188 801
- DE-A- 2 044 858
- FR-A- 2 080 160
- FR-A- 2 402 333
- GB-A- 2 016 213
- US-A- 3 747 998

## Beschreibung

Die Erfindung bezieht sich auf eine Antriebseinheit, insbesondere elektromotorischen Fensterheber-Antrieb für ein Kraftfahrzeug gemäß Patentanspruch 1.

Durch die DE-U-83 23 218 ist ein elektromotorischer Fensterheber-Antrieb für ein Kraftfahrzeug mit einer durchgehenden Antriebswelle bekannt, die innerhalb eines Motorgehäuses das Rotorpaket und den Kommutator eines Kommutatormotors und in einem an das Motorgehäuse anschließenden Getriebegehäuse eine mit einem Schneckenrad kämmende Schnecke aufnimmt. Die Antriebswelle ist jeweils an ihren äußeren Wellenenden durch je ein Kalottenlager im Getriebegehäuse bzw. Motorgehäuse gelagert. Die durch das Schnekkengetriebe auf die Antriebswelle wirkenden Axialkräfte werden in der einen Drehrichtung durch eine Axialspiel-Einstellschraube im Getriebegehäuse und in der anderen Richtung durch die senkrecht zur Achse der Antriebswelle ebene Anlauffläche der Stirnseite des Motorgehäuses aufgenommen, gegen welche die stirnseitigen Enden der Antriebswelle, vorzugsweise über einen Anlaufpilz, anlaufen.

Neben der bereits erwähnten Axialkraft entstehen an der Schneckenverzahnung auch an die Antriebswelle angreifende Radialkräfte und Tangentialkräfte. Die aus diesen beiden Kräften resultierende Gesamtkraft bewirkt eine leichte elastische Durchbiegung der Welle, derart daß die stirnseitigen Anlaufpilze der Antriebswelle exzentrisch versetzt an den gehäuseseitigen Gegenlagerstellen weglaufen.

Insbesondere für den Fall, daß eine Lagerung der Antriebswelle mit zwei Lagern seitlich der Schneckenwelle und somit mit fliegender Lagerung des motorseitigen freien Wellenendes vorgesehen ist, besteht die Gefahr, daß bei Anlauf dieses Wellenendes gegen die ebene Anlauffläche des Motorgehäuses das freie Wellenende soweit exzentrisch abgebogen wird, daß es zur Kollision zwischen dem von der Antriebswelle aufgenommenen Rotorpaket und den in Luftspaltabstand gegenüberliegenden Magnetsegmenten des Stators kommen kann. Zur Verhinderung einer derartigen Kollision müßte die Antriebswelle stärker dimensioniert oder durch zusätzliche Abstützmittel - wie z.B. im Fall der DE-U-81 28 186 - gegen ein radiales Ausbiegen geschützt werden. Ein vergleichbarer Antrieb ist ebenfalls aus der GB-A-2 016 213 bekannt.

Es ist Aufgabe vorliegender Erfindung, mit einfachen konstruktiven und montagetechnischen Mitteln ein zu starkes exzentrisches Verbiegen des motorseitigen Wellenendes der Antriebswelle verhindern zu können. Dies gelingt gemäß vorliegender Erfindung durch das Merkmal c) des Hauptanspruchs; vorteilhafte Ausgestaltungen der Erfindung sind jeweils Gegenstand der Unteransprüche.

Durch die auf einfache Weise bei Herstellung des Motorgehäuse erfindungsgemäß geformte Anlauffläche für die Stirnseite der Antriebswelle kann ohne gesonderte radiale Abstützmittel bzw. ohne verstärkte Auslegung der Antriebswelle selbst oder der sie aufnehmenden Lager eine zwangsweise Rückführung des zur exzentrischen Auslenkung neigenden freien Wellenendes in das Zentrum der balligen Anlauffläche und somit in Richtung der neutralen Achse der Antriebswelle erreicht werden. Eine besonders einfache und gleichzeitig zur Achse der Antriebswelle genau ausgerichtete ballige Anlauffläche läßt sich mit einfachen Mitteln in vorteilhafter Weise insbesondere bei einem topfförmigen Motorgehäuse mit in die Topfbodenstirnseite eingeformter Anlauffläche für das freie Wellenende der Antriebswelle erreichen.

Die Erfindung sowie weitere vorteilhafte Ausgestaltungen der Erfindungen gemäß Merkmalen der Unteransprüche werden im folgenden anhand eines schematisch dargestellten Ausführungsbeispiels in der Zeichnung näher erläutert; darin zeigen:
- FIG 1: einen axialen Längsschnitt durch einen elektromotorischen Fensterheber-Antrieb für ein Kraftfahrzeug;
- FIG 2: die auf ein exzentrisch versetztes freies Wellenende der Antriebswelle einwirkenden Kräfte bei einer bekannten ebenen Anlauffläche;
- FIG 3: die auf ein exzentrisch versetztes freies Wellenende der Antriebswelle einwirkenden Kräfte bei einer erfindungsgemäß ballig ausgeführten Anlauffläche.

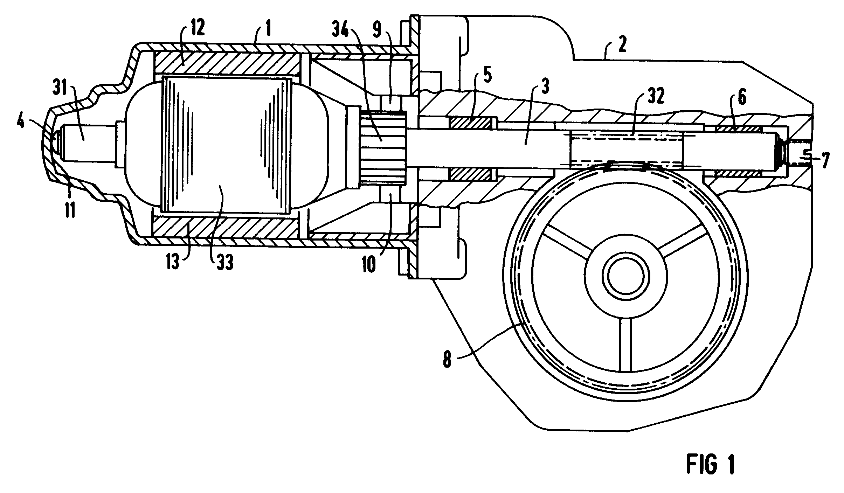

FIG 1 zeigt in einem axialen Längsschnitt einen elektromotorischen Fensterheber-Antrieb für ein Kraftfahrzeug mit einem Motorgehäuse 1 eines Kommutatormotors und einem daran angeflanschten Getriebegehäuse 2 eines Schneckengetriebes zum Antrieb z.B. einer Seilscheibe für einen Seilzug-Fensterheber. In Längsrichtung des elektromotorischen Fensterheber-Antriebs ist eine Antriebswelle 3 gelagert, die auf ihrem linken Wellenende ein mit einer Rotorwicklung versehenes Rotorpaket 33 und zwischen dem Rotorpaket 33 und dem einen Lager 5 einen Kommutator 34 sowie auf ihrem rechten Wellenende eine mit einem Schneckenrad 8 kämmende Schnecke 32 aufnimmt. Motorseitig sind dem gewickelten Rotorpaket 33 im Luftspaltabstand am Umfang des Motorgehäuses schalenförmige Dauermagnete 12;13 und dem Kommutator 34 seine Oberfläche beschleifende Bürsten 9;10 zugeordnet.

Die Antriebswelle 3 ist in vorteilhafter Weise beidseitig der Schnecke 32 mit je einem, vorzugsweise als Gleitlager ausgebildeten, Lager 5 bzw.6 und somit im Sinne einer fliegenden Lagerung des motorseitigen Endes der Antriebswelle 3 gelagert. Zur Aufnahme der aufgrund des Schneckengetriebes auf die Antriebswelle je nach Drehrichtung des Kommutatormotors in der einen oder anderen Achsrichtung wirkenden Axialkräfte kann die Antriebswelle 3 mit ihrem rechten Ende über einen Anlaufpilz z.B. gegen eine Axialspiel-Einstellschraube 7 und mit ihrem linken freien Wellenende 31 über einen stirnseitigen, als gesondertes Bauteil in die Antriebswelle 3 eingesetzten Kunststoff-Anlaufpilz 4 gegen die stirnseitige, erfindungsgemäß ballige Anlauffläche 11 des Motorgehäuses 1 anlaufen; der Krümmungsradius R der balligen Anlauffläche 11 des Gehäuseteils (Motorgehäuse 1) ist geringfügig größer als der Krümmungsradius r des Anlaufpilzes 4.

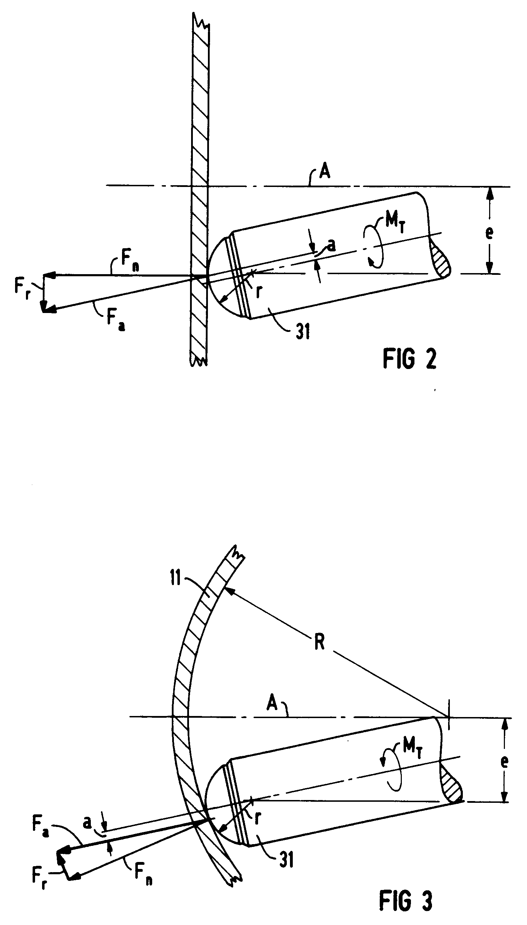

FIG 2 verdeutlicht die auf das freie Wellenende 31 einwirkenden Kräfte bei Anlauf gegen eine bekanntermaßen vorgesehene zur Achsrichtung A der Antriebswelle 3 senkrechten ebenen Anlauffläche. Bei einer Außermittigkeit e zwischen dem freien Wellenende der Antriebswelle 3 und dem zentrischen Anlauf dieser Achse gegen die gehäuseseitige Anlauffläche 11. Aufgrund des angezeigten Kräftedreiecks mit einer Normalkraft Fn einer Axialkraft Fa ergibt sich eine nach radial außen gerichtete Radialkraft Fr, die zusätzlich zur durch die Schneckenkraft veranlaßten Biegung und selbstverstärkend im Sinne einer weiter vergrößerten Exzentrizität auf das freie Wellenende 31 einwirkt. Da der Drehpol des Anlaufpilzes 4 mit dem Krümmungsradius r nicht mit dem Berührpunkt des freien Wellenendes 31 zusammenfällt sondern um den Abstand a versetzt ist, entsteht zusätzlich ein Taumelmoment M_{T}, das das freie Wellenende 31 und damit die Antriebswelle 3 von der Achsrichtung A der Antriebswelle 3 wegführt. Die Antriebswelle 3 kann im Bereich der fliegenden Lagerung des Rotorpaketes 33 durch die derart wirkenden Kräfte soweit durchgebogen werden, daß es zur Kollision zwischen dem Rotorpaket 33 und den luftspaltseitig benachbarten schalenförmigen Dauermagneten 12;13 des Stators kommen kann. Die Folgen davon sind unzumutbare Geräuschentwicklungen und Leistungsminderungen des gesamten Antriebs.

FIG 3 zeigt die erfindungsgemäß ballige Formung der motorgehäuseseitigen Anlauffläche 11 mit einem Krümmungsradius R, der geringfügig größer ist als der Krümmungsradius r des Anlaufpilzes 4. Aufgrund des nunmehr geltenden Kräftedreiecks zwischen der Axialkraft Fa, der Normalkraft Fn und der Radialkraft Fr ergibt sich eine radiale Kraftkomponente, die im Unterschied zu FIG 2 zur Zentrumsmitte und somit in Achsrichtung A der Antriebswelle 3 zeigt und daher das exzentrisch ausgelenkte freie Wellenende 31 zwangsläufig zurückführen will. Das ebenfalls wieder auftretende Taumelmoment M_{T} ist ebenfalls derart zur Achsrichtung A gerichtet, da im Unterschied zu FIG 2 nunmehr der Berührungspunkt zwischen dem Anlaufpilz 4 mit dem Krümmungsradius r und der balligen Anlauffläche 11 mit dem Krümmungsradius R um den Abstand a nach radial außen verlegt ist; die rückführende Radialkraft Fr ist umso größer, je kleiner die Krümmungsradien-Differenz R - r und je größer die Auslenkung e ist.

## Patentansprüche

1. Antriebseinheit, insbesondere elektromotorischer Fensterheber-Antrieb für ein Kraftfahrzeug, mit den Merkmalen:
a) eine Antriebswelle (3) läuft mit einem freien Wellenende (31) axial stirnseitig gegen eine Anlauffläche (11) eines Gehäuseteils (1) an;
b) auf das freie Wellenende (31) wirken radiale Verstellkräfte im Sinne einer Verstellung der Antriebswelle (3) aus ihrer zentrischen Achslage ein;
c) die Anlauffläche (11) ist gegenüber dem anlaufenden freien Wellenende (31) ballig im Sinne einer bei exzentrischem Anlauf die Antriebswelle (3) in ihre zentrische Achslage rückstellenden Kraft ausgebildet.

2. Antriebseinheit nach Anspruch 1 mit dem Merkmal:
d) Als Antriebswelle (3) läuft eine Motor-Getriebewelle einer Antriebseinheit mit einem Elektromotor, insbesondere Kommutatormotor, und einem axial anschließenden Schneckengetriebe mit ihrem motorseitigen freien Wellenende (31) gegen die topfbodenseitige Anlauffläche (11) eines topfförmigen Motorgehäuses (1) an.

3. Antriebseinheit nach Anspruch 2 mit dem Merkmal:
e) Die Antriebswelle (3) ist im Sinne einer fliegenden Lagerung des freien Wellenendes (31) über Lager (5;6) beidseitig der Schneckenwelle (32) des Schneckengetriebes gelagert.

4. Antriebseinheit nach Anspruch 3 mit dem Merkmal:
f) Der Kommutator (34) des als Antriebsmotor vorgesehenen Kommutatormotors ist auf der Antriebswelle (3) zwischen dem schneckenwellenseitigen Lager (5) und dem Rotorpaket (33) des Elektromotors angeordnet.

5. Antriebseinheit nach einem der Ansprüche 1-4 mit dem Merkmal:
g) Das freie Wellenende (31) der Antriebswelle (3) ist mit einem konvexartig gekrümmten Anlaufpilz (4) versehen.

6. Antriebseinheit nach Anspruch 5 mit dem Merkmal:
h) Der Anlaufpilz (4) besteht aus einem gesonderten, insbesondere aus Kunststoff gebildeten, von dem stirnseitigen freien Wellenende (31) der Antriebswelle (3) aufgenommenen Bauteil.

7. Antriebseinheit nach Anspruch 5 und/oder 6 mit dem Merkmal:
i) Der Krümmungsradius (R) der balligen Anlauffläche (11) des Gehäuseteils (1) ist geringfügig grösser als der Krümmungsradius (r) des Anlaufpilzes (4).

## Claims

1. Drive unit, particularly an electric motor-driven window lift drive for a motor vehicle, having the features in that:
a) a drive shaft (3) abuts with the front end of its free shaft end (31) against a thrust face (11) of a housing part (1);
b) radial displacement forces act on the free shaft end (31) in the sense of a displacement of the drive shaft (3) from its centrical axial position;
c) compared to the contacting free shaft end (31), the thrust face (11) is of convex form in the sense that, given an eccentric abutment, a force restores the drive shaft (3) to its centrical axial position.

2. Drive unit according to Claim 1, with the feature in that:
d) as the drive shaft (3) a motor gear shaft of a drive unit with an electric motor, particularly a commutator motor, and an axially-connected worm drive with its motor-side free shaft end (31) against the cup-base-side thrust face (11) of a cup-shaped motor housing (1).

3. Drive unit according to Claim 2 with the feature in that:
e) in the sense of an overhung bearing arrangement of the free shaft end (31), the drive shaft (3) is supported via bearings (5; 6) on both sides of the worm gear (32) of the worm drive.

4. Drive unit according to Claim 3, with the feature in that:
f) the commutator (34) of the commutator motor provided as the drive motor, is arranged on the drive shaft (3) between the worm gear-side bearing (5) and the laminated core of the rotor (33) of the electric motor.

5. Drive unit according to one of the Claims 1 to 4, with the feature in that:
g) the free shaft end (31) of the drive shaft (3) is provided with a convex, curved mushroom-type thrust head (4).

6. Drive unit according to Claim 5, with the feature in that:
h) the mushroom-type contact face (4) consists of a separate component, in particular made from plastic, accommodated by the front-end free shaft end (31) of the drive shaft (3).

7. Drive unit according to Claim 5 and/or 6 with the feature in that:
i) the radius of curvature (R) of the convex thrust face (11) of the housing part (1) is slightly larger than the radius of curvature (r) of the mushroom-type thrust head (4).

## Revendications

1. Unité d'entraînement, notamment dispositif d'entraînement de lève-glace à moteur électrique pour un véhicule automobile, présentant les caractéristiques suivantes :
a) un arbre d'entraînement (30) s'applique axialement et frontalement, par une extrémité libre (31), contre une surface d'appui (11) d'un élément de boîtier (1);
b) sur l'extrémité libre (31) de l'arbre agissent des forces radiales de déplacement dans le sens d'un déplacement de l'arbre d'entraînement (30), à partir de sa position axiale centrée;
c) la surface d'appui (11) est réalisée avec une forme arrondie par rapport à l'extrémité libre (31) de l'arbre, qui prend appui sur cette surface, de telle sorte que dans le cas d'un appui excentré, une force ramène l'arbre d'entraînement (3) dans sa position axiale centrée.

2. Unité d'entraînement suivant la revendication 1, présentant la caractéristique suivante :
d) comme arbre d'entraînement (3), un arbre du bloc moteur-transmission de l'unité d'entraînement comportant un moteur électrique, notamment un moteur à collecteur, et une transmission à vis sans fin raccordée axialement, circule par son extrémité libre (31), située du côté du moteur, sur la surface d'appui (11), située du côté du fond du pot, d'un carter en forme de pot (1) du moteur.

3. Unité d'entraînement suivant la revendication 2, présentant la caractéristique suivante :
e) l'arbre d'entraînement (3) est supporté au moyen de paliers (5; 6), des deux côtés de l'arbre de vis (32) de la transmission à vis sans fin, dans le sens d'un support flottant de l'extrémité libre (31) de l'arbre.

4. Unité d'entraînement suivant la revendication 3, présentant la caractéristique suivante :
f) le collecteur (34) du moteur à collecteur prévu comme moteur d'entraînement est monté sur l'arbre d'entraînement (3) entre le palier (5) situé du côté de l'arbre de la vis sans fin, et le paquet rotorique (33) du moteur électrique.

5. Unité d'entraînement suivant l'une des revendications 1-4, présentant la caractéristique suivante :
g) l'extrémité libre (31) de l'arbre d'entraînement (3) est pourvue d'un bossage d'appui cintré convexe (4).

6. Unité d'entraînement suivant la revendication 5, présentant la caractéristique suivante :
f) le bossage d'appui (4) est constitué par un composant particulier, réalisé notamment en matière plastique, qui est monté sur l'extrémité frontale libre (31) de l'arbre d'entraînement (30).

7. Unité d'entraînement suivant la revendication 5 et/ou 6, présentant la caractéristique suivante :
i) le rayon de courbure (A) de la surface d'appui arrondie (11) de la partie (1) du boîtier est légèrement supérieur au rayon de courbure (r) du bossage d'appui (4).
